# EUROPEAN PATENT SPECIFICATION

(11) **EP 3 250 619 B1**
(45) Date of publication and mention of the grant of the patent: **24.04.2024**
(21) Application number: 15882266.8
(22) Date of filing: 03.12.2015
(51) Int. Cl.: C08G 18/10, C08G 18/30, C08G 18/38, C08G 18/68, C08G 18/42, C08G 18/36, C08G 18/67, C08G 18/75, C08G 18/80, C08G 18/81

(54) **FUNCTIONALIZED POLYURETHANES PREPARED FROM RENEWABLE MATERIALS**
AUS ERNEUERBAREN MATERIALIEN HERGESTELLTE, FUNKTIONALISIERTE POLYURETHANE
POLYURÉTHANES FONCTIONNALISÉS PRÉPARÉS À PARTIR DE MATIÈRES RENOUVELABLES

(30) Priority: 26.01.2015 US 201562107635 P
(43) Date of publication of application: 06.12.2017
(73) Proprietor: Henkel AG & Co. KGaA, 40589 Düsseldorf (DE)
(72) Inventor: MESSANA, Andrew D., Newington, Connecticut 06111 (US); DWORAK, David P., East Hartford, Connecticut 06118 (US); JACOBINE, Anthony F., North Haverhill, New Hampshire 03774 (US); MESSANA, Angelica, Newington, Connecticut 06111 (US)
(86) International application number: PCT/US2015/063629
(87) International publication number: WO 2016/130201

(56) References cited:
- WO-A1-2014/114957
- WO-A1-2014/159048
- DE-C1- 10 225 367
- JP-A- 2009 249 613
- JP-A- 2010 116 429
- US-A1- 2002 132 118
- US-A1- 2004 181 007
- US-A1- 2004 181 007
- US-A1- 2010 006 208
- US-A1- 2010 160 469
- US-A1- 2012 269 977
- US-A1- 2012 271 027
- US-A1- 2014 088 219
- US-A1- 2014 323 638

## Description

### FIELD OF THE INVENTION

The invention relates generally to the preparation of functionalized polyurethanes made from renewable materials and compositions made therefrom. More particularly, the invention relates to the preparation of polyurethanes from hydroxylated plant oils and curable compositions made therefrom.

### BACKGROUND OF RELATED TECHNOLOGY

There is a current emphasis on renewable sources for materials, particularly as a means of replacing petroleum-based products. A number of companies have focused on modifying plant oils to include functional groups which are useful for further reactions and producing polymer materials. For example, U.S. Patent 6,891,053 discloses a method of making oleochemical oil-based polyols by mixing an epoxidized oleochemical, such as a vegetable or animal fat, and an alcohol using an activated or acid leached-clay to form the oleo-chemical oil-based polyol. U.S. Patents 8,757,294 and 8,575,378 disclose other methods of making modified plant-based polyols by using a plant oil which includes at least one C=C group and reacting that group with a nucleophilic functional group and an active hydrogen group. The result is specific plant oils which have hydroxyl functionalization useful for further reaction, such as the reaction with an amine compound to form a polyurethane.

Recently, commercially available modified plant oils having hydroxyl functionality have been commercially available as renewable sources for making materials. For example, several soy-based_polyols sold under the brand Agrol by Biobased Technologies, Springdale, Arizona, are disclosed as being useful sources of renewable polyols which may be used for making polyurethanes.

There is need for a process which uses renewable materials such as plant oils to form polyurethane polymers which contain alkoxy, and other functionality.

### BRIEF DESCRIPTION OF THE DRAWINGS

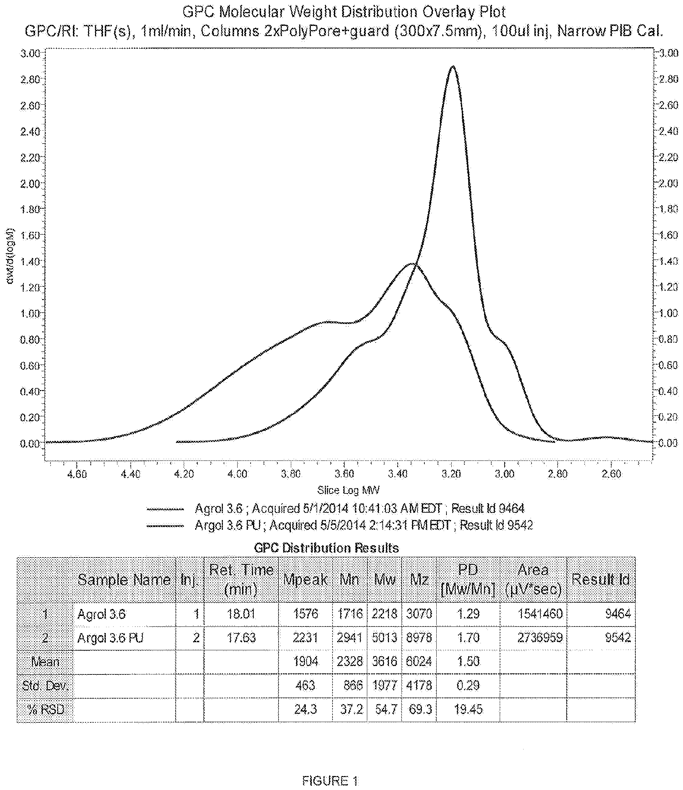

Figure 1 shows the gel permeation chromatography (GPC) trace of the starting olechemical oil-based polyol, Agrol 3.6 (peak retention time ~2.3 min., PDI=2.29). After extension with isophorone diisocyante, the molecular weight has increased significantly as denoted by the broad GPC trace, as well as the increase in the PDI of the material (1.70) and Mw (5,013 from 2,218). Figure 1 illustrates that oleochemical oil-based polyols can be extended into polyurethanes using diisocyantes.

### SUMMARY OF THE INVENTION

The present invention relates to polyurethane prepared by the raction product of a) an NCO-terminated polymer formed from the reaction of a hydroxylated oleaginous component derived from plant oil comprising hydroxylated soybean oil and a diisocyante; and b) an alkoxy-functionalized monomer.

### DETAILED DESCRIPTION OF THE INVENTION

The present invention provides new processes and curable polymers/compositions using bio-based polyol materials, such as plant oils. Plant oils generally require modification to include hydroxyl groups in their chemical structure, and such products are currently commercially available. The present invention includes the use of such bio-based polyols, for either direct reaction with an appropriate alkoxy-containing isocyanate compound to form curable polyurethanes. Moreover, additional modifications of the bio-based polyol may be made such that NCO groups and/or moisture curable groups, such as alkoxy groups C₁₋₄, may be incorporated into the bio-based polyol. In such cases, the resultant polyurethane formed therefrom may also have moisture curing capability.

A variety of renewable hydroxylated plant oils (also known as bio-based polyols) may be used in the present invention. For example, oils such as soybean oil almond oil, canola oil, coconut oil, cod liver oil, corn oil, cottonseed oil, flaxseed oil, linseed oil, olive oil, palm oil, peanut oil, safflower oil, sesame oil, sunflower oil, walnut, castor oil and combinations thereof, may be used.

Among the preferred renewable hydroxylated plant oils are those commercially under the trade name Agrol, sold by Biobased Technologies, Springfiled, Arkansas, as further described herein. The Agrol polyols are hydroxylated soybean oils, which are derived for natural soybean. The degree of hydroxylation may vary and hydroxyl values from 70 to 200 mg KOH / g may be employed. The viscosity of these soybean-derived polyols may vary from about 200 to about 3,000 at 25°C and hydroxyl functionality can range from 1.7 to 7.0 eq / mol.

Diisocyantes useful in the present invention include, without limitation, isophorone diisocyanate (IPDI), IPDI isocyanaurate, polymeric IPDI, naphthalene 1,5-diisocyanate (NDI), methylene bis-cyclohexylisocyanate, methylene diphenyl diisocyanate (MDI), polymeric MDI, toluene diisocyanate (TDI), isocyanaurate of TDI, TDI-trimethylolpropane adduct, polymeric TDI, hexamethylene diisocyanate (HDI), HDI isocyanaurate, HDI biurate, polymeric HDI, xylylene diisocyanate, hydrogenated xylylene diisocyanate, tetramethyl xylylene diisocyanate, p-phenylene diisocyanate, 3,3'-dimethyldiphenyl-4,4'-diisocyanate (DDDI), 2,2,4-trimethylhexamethylene diisocyanate (TMDI), norbornane diisocyanate (NDI), and 4,4'-dibenzyl diisocyanate (DBDI). Combinations of diisocyantes may also be used. Monoisocyantes may also be used in the present invention.

Among the useful alkoxy-containing isocyanates useful for reaction with the bio-based polyols include, without limitation, 3-isocyanatopropyltriethoxysilane, 3-isocyanatopropylmethyldiethoxysilane, 3-isocyanatopropyldimethylethoxysilane, 3-isocyanatopropyltrimethoxysilane,
3-isocyanatopropylmethyldimethoxysilane, and 3-isocyanatopropyldimethylmethoxysilane.

Among the useful alkoxy-containing amines for use in the invention include 4-aminobutyltriethoxysilane, 4-aminobutylmethyldiethoxysilane, 4-aminobutyldimethylethoxysilane, 4-aminobutyltrimethoxysilane, 4-aminobutylmethyldimethoxysilane, 4-aminobutyldimethylmethoxysilane, 4-amino-3,3-dimethylbutylmethyldimethoxysilane, dimethylbutyltrimethoxysilane, 1-amino-2-(dimethylethoxysilyl)propane, 3-(m-aminophenoxy)propyltrimethoxysilane, m-aminophenyltrimethoxysilane, m-aminophenyltriethoxysilane, 3-aminopropyltriethoxysilane, 3-aminopropylmethyldiethoxysilane, 3-aminopropyldimethyethoxysilane, 3-aminopropyltrimethoxysilane, 3-aminopropylmethyldimethoxysilane, 3-aminopropyldimethymethoxysilane, 3-aminopropylmethylbis(trimethylsiloxy)silane, 3-aminopropylpentamethyldisiloxane, 11-aminoundecyltriethoxysilane, and 11-aminoundecyltrimethoxysilane.

As mentioned herein, when the bio-based polyol also includes other reactive groups such a NCO groups and/or alkoxy groups, resultant polyurethanes formed therefrom may have these groups available for further reactions. For example, the presence of a reactive NCO group on the bio-based polyol allows for reaction with an amine group to form a urea linkage. Thus, the inventive polyurethanes formed from the bio-based polyols used in the present invention allow for a variety of polyurethane end products having such functionalities as alkoxy functionality, which in turn allows for free radical and/or moisture curing mechanisms to be employed in the final curable compositions made therefrom.

A variety of curable compositions may be made from the polyurethanes of the invention. For example, adhesive compositions, sealants and coatings are among the useful products which may be formed from the inventive renewable compositions.

The polyurethane compositions of the present invention may be incorporated into curable compositions having moisture cure mechanism.

Accelerators may also be advantageously included. Such accelerators include a variety of secondary and tertiary organic amines as well as sulfimides (e.g., benzoic sulfimide) which are also known in the art. These may be used at a concentration range of 0.1 to 5, desirably 1 to 2, percent by weight of the total composition.

Other agents such as thickeners, plasticizers, etc., are also known in the art and may advantageously be incorporated where functionally desirable, provided only that they do not interfere with the functioning of the additive for its intended purpose.

### SYNTHESES FOR PREPARING CURABLE FUNCTIONALIZED POLYURETHANE POLYMERS

The curable functionalized polyurethane polymers of the present invention may be formed using more than one method.

In a first method ("Direct Method"), which is not according to the invention but is present for illustration purposes only, the hydroxylated oleaginous component derived from plant oil is directly reacted with a (meth)acrylate component containing a free NCO group to directly form curable (meth)acrylate-functionalized polyurethane polymers. These polyurethane polymers may contain one or more moisture curing groups.

Desirably the equivalents ratio of OH:NCO in the reactants is 0.1 to 3.0. More desirably the equivalents ratio of OH:NCO in the reactants is 0.4 to 2.0, and even more desirably 0.8 to 1.0 equivalents of OH:NCO.

The reaction is run in reactor with or without a suitable solvent. When solvents are employed, polar solvents such as toluene, tetrahydrofuran (THF), ethyl acetate, xylenes, and the like may be employed. The reaction is generally run at temperatures of 25°C to 100°C, preferably 40 °C to 80 °C, and more preferably 60°C to 75 °C. Metal-based catalysts, such as dibutyltin dilaurate among others as further described herein, may be used in amounts of 0.01% to 5 wt%, preferably 0.5% to 2 wt%, and more preferably 0.1% to 1.0 wt%, based on the weight of the total reaction mixture. Desirably, the reaction is carried out for as long as required to substantially fully react the isocyanate and hydroxyl groups. Reaction times may range from 2 to 24 hours, preferably 3 to 12 hours, and more preferably 4 to 8 hours. The resultant curable /alkoxy-functionalized polyurethane polymer has incorporated therein at least a (hydroxylated oleaginous and portion of, and desirably substantially all of the oleaginous component.

In a second method ("Extended Method") which is according to the present invention, a hydroxylated oleaginous component derived from plant oil is reacted with a diisocyanate to form a polyurethane intermediate. The stoichiometry of the reactants is controlled such that the polyurethane intermediate contains unreacted pendent NCO groups, intended to be used for further reaction. That is, pendent NCO groups remain on the polyurethane intermediate for further reaction with an alkoxy-containing amine component. The amount of residual NCO may be 5 to 90 wt%, to preferably 25 to 70 wt%, and more preferably 30 to 60%.

The equivalents ratio of OH to NCO in the starting reactants diisocyanate components) is desirably 0.1 to 10.0, more desirably 0.2 to 3.0, and even more desirably 0.5 to 2.0 equivalents of OH to NCO. The reaction is run in a reactor with or without a suitable solvent. When solvents are employed, polar solvents such as toluene, tetrahydrofuran (THF), ethyl acetate, xylenes, and the like may be employed. The reaction is generally run at temperatures of 25°C to 100°C, desirably 40 °C to 80 °C, and more desirably 60°C to 75 °C. Metal-based catalysts, such as dibutyltin dilaurate (among others, as further described herein), may be used in amounts of 0.01% to 5 %, desirably 0.5% to 2 %, and more desirably 0.1% to 1.0 %, based on the weight of the total reaction mixture. The reaction is carried out for as long as required to substantially fully react the hydroxyl groups with NCO groups. The reaction times may vary from 2 to 24 hours, desirably 3 to 12 hours, and more desirably 4 to 8 hours. Due to the excess NCO groups present in the reaction, the formed intermediate polyurethane will contain pendent NCO groups which are available for reaction with additional components. For example, the intermediate polyurethane may be further reacted, if desired, with a component(s) containing hydroxyl groups, alkoxy groups or amine groups. For example, the intermediate polyurethane polymer may be reacted with an aminosilane compound which includes alkoxy functionality for moisture curing.

The amount of renewable content present in the intermediate and final polymers made in accordance with the present invention may range from 30% to 70% by weight, more desirably 45% to 60% by weight. Due to the selection of the specific hydroxylated oleaginous material, the end products formed may contain a hard (relatively rigid) segment (attributed to the reaction of the diisocyanate with short chain diols present in the hydroxylated oleaginous materials) of 1 to 10% and desirably 2% to 5% by weight.

One particularly useful method of preparing the polyurethanes of the present invention include the reaction steps of:

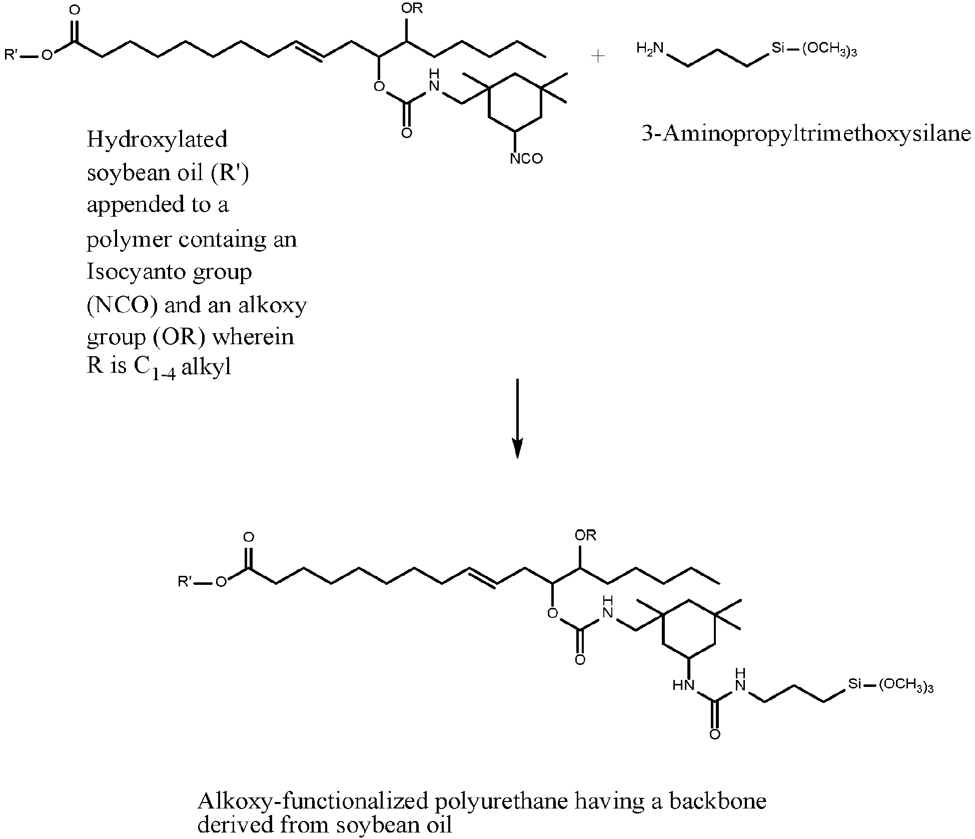

### EXAMPLES

The following examples 1 - 9 are not according to the invention and are present for illustration purposes only.

Agrol 2.0 is the trade name for an hydroxylated soybean oil derived from natural soybean having hydroxyl values of 65-75, an acid value (mg KOH/g) ≤1.0, a viscosity of about 233 at 25 °C available from BioBased Technologies, Springfield, Arkansas.

Agrol 3.6 is the trade name for an hydroxylated soybean oil derived from natural soybean having hydroxyl values of 107-117, an acid value (mg KOH/g) ≤1.0, a viscosity of about 720 at 25 °C available from BioBased Technologies, Springfield, Arkansas.

Pomoflex 6156 is a bio-based polyol derived from succinic acid and propane diol made by Piedmont Chemical Industries I, LLC, 331 Burton Avenue, High Point, NC 27262. It has a molecular weight of about 2,000, a functionality of 2.0, a hydroxyl number of 56 mg KOH/g and an acid value (mg KOH/g) < 1.

### EXAMPLE 1

### Preparation of a Curable (Meth)acrylate-Functionalized Polyurethane Using the Extended Method Described Above (Methacrylated Agrol 2.0 / IPDI (1.0 : 1.72) Polyurethane Resin)

To a 2-L jacketed polymerization reactor equipped with a thermocouple, stirrer, condenser, and nitrogen inlet/oulet was added Agrol 2.0 (374.61 g, 0.1766 moles), dibutyltin dilaurate (0.24 g, 0.0004 moles), 3-(3,5-ditert-butyl-4-hydroxyphenyl)propanoic acid, [3-[3-(3,5-ditert-butyl-4-hydroxyphenyl)-1-oxopropoxy]-2,2-bis[[3-(3,5-ditert-butyl-4-hydroxyphenyl)-1-oxopropoxy]methyl]propyl] ester (0.096 g, 0.00008 moles), 4-methoxyphenol (0.096 g, 0.0008 moles), and phosphoric acid (0.013g, 0.00014 moles). The contents were heated to 60 °C and allowed to mix for 15 minutes. Isophorone diisocyanate (IPDI) (71.49 g, 0.321 moles) was added and allowed to react for about +2 hours. A titration was then performed to determine the residual isocyanate content. Hydroxyethylmethacrylate (36.92 g, 0.284 moles) was then added and allowed to react for 3 hours at 60 °C. This reaction resulted in the formation of a clear and yellow and viscous methacrylated polyurethane resin (451.6 g, 93.4% yield).

### EXAMPLE 2

### Preparation of a Curable (Meth)acrylate-Functionalized Polyurethane Using the Extended Method Described Above (Methacrylated Agrol 2.0 / IPDI (1.0 : 2.0) Polyurethane Resin)

To a 2-L jacketed polymerization reactor equipped with a thermocouple, stirrer, condenser, and nitrogen inlet/oulet was added Agrol 2.0 (228.78 g, 0.1407 moles), dibutyltin dilaurate (0.17 g, 0.0003 moles), 3-(3,5-ditert-butyl-4-hydroxyphenyl)propanoic acid [3-[3-(3,5-ditert-butyl-4-hydroxyphenyl)-1-oxopropoxy]-2,2-bis[[3-(3,5-ditert-butyl-4-hydroxyphenyl)-1-oxopropoxy]methyl]propyl] ester (0.096 g, 0.00008 moles), 4-methoxyphenol (0.069 g, 0.0006 moles), and phosphoric acid (0.009g, 0.00009 moles). The contents were heated to 60 °C and allowed to mix for 15 minutes. Isophorone diisocyante (IPDI) (65.51 g, 0.295 moles) was added and allowed to react for +2 hours. A titration was then performed to determine the residual isocyanate content. Hydroxyethylmethacrylate (44.65 g, 0.343 moles) was then added and allowed to mix for 3 hours at 60 °C. This reaction resulted in the formation of a clear and yellow, viscous methacrylated polyurethane resin (329.4 g, 94.1% yield).

### EXAMPLE 3

### Preparation of a Curable (Meth)acrylate-Functionalized Polyurethane Using the Extended Method Described Above (Methacrylated Agrol 3.6 / IPDI (1.0 : 2.0) Polyurethane Resin)

To a 2-L jacketed polymerization reactor equipped with a thermocouple, stirrer, condenser, and nitrogen inlet/oulet was added Agrol 3.6 (582.61 g, 0.3739 moles), dibutyltin dilaurate (0.49 g, 0.0008 moles), and phosphoric acid (0.025g, 0.0003 moles). The contents were heated to 60 °C and allowed to mix for 15 minutes. Isophorone diisocyante (IPDI) (256.52 g, 1.154 moles) was added and allowed to react for +2 hours. A titration is then performed to determine the residual isocyanate content. Hydroxyethylmethacrylate (168.68 g, 1.296 moles) was then added and allowed to mix for 3 hours at 60 °C. This reaction resulted in the formation of a clear and yellow, viscous methacrylated polyurethane resin (931.7 g, 92.4% yield. GPC analysis of this material shows the Agrol 3.6 before and after the reaction. Figure 1 below shows the increased molecular weight growth and dramatic broadening of the polydispersity index, which is indicative of polyurethane resins.

### EXAMPLE 4

### Preparation of a Curable (Meth)acrylate-Functionalized Polyurethane Using the Extended

### Method Described Above (Methacrylated Agrol 3.6 and IPDI (1.0 : 2.0) Polyurethane Resin with IPDI and HEMA Hard Block Moities Prepared in situ)

To a 2-L jacketed polymerization reactor equipped with a thermocouple, stirrer, condenser, and nitrogen inlet/oulet was added isophorone diisocyanate (68.00 g, 0.310 moles), hydroxyethylmethacrylate (19.81 g, 0.152 moles), dibutyltin dilaurate (0.21 g, 0.0003 moles), 3-(3,5-ditert-butyl-4-hydroxyphenyl)propanoic acid, [3-[3-(3,5-ditert-butyl-4-hydroxyphenyl)-1-oxopropoxy]-2,2-bis[[3-(3,5-ditert-butyl-4-hydroxyphenyl)-1-oxopropoxy]methyl]propyl] ester (0.021 g, 0.00002 moles), 4-methoxyphenol (0.021 g, 0.0002 moles), and phosphoric acid (0.009g, 0.00009 moles). The contents were heated to 65 °C and allowed to react for +1 hour. Agrol 3.6 (79.45 g, 0.0495 moles) was then added and allowed to mix for +2 hours. A titration was then performed to determine the residual isocyanate content. Hydroxyethylmethacrylate (40.98 g, 0.284 moles) was then added and allowed to mix for 3 hours at 60 °C. This reaction resulted in the formation of a clear and yellow, viscous methacrylated polyurethane resin (193.4 g, 93.8% yield).

### EXAMPLE 5

### Preparation of a Curable (Meth)acrylate-Functionalized Polyurethane Using the Direct Method Described Above (Methacrylated Agrol 4.0 and IPDI (1.0 : 2.0) Polyurethane Resin with IPDI and HEMA Hard Block Moities Prepared in situ)

To a 2-L jacketed polymerization reactor equipped with a thermocouple, stirrer, condenser, and nitrogen inlet/oulet was added isophorone diisocyanate (IPDI) (250.00 g, 1.125 moles), hydroxyethylmethacrylate (58.27 g, 0.448 moles), dibutyltin dilaurate (1.47 g, 0.0023 moles), 3-(3,5-ditert-butyl-4-hydroxyphenyl)propanoic acid, [3-[3-(3,5-ditert-butyl-4-hydroxyphenyl)-1-oxopropoxy]-2,2-bis[[3-(3,5-ditert-butyl-4-hydroxyphenyl)-1-oxopropoxy]methyl]propyl] ester (0.084 g, 0.0001 moles), 4-methoxyphenol (0.021 g, 0.0002 moles), and phosphoric acid (0.08g, 0.0008 moles). The contents were heated to 65 °C and allowed to react for +1 hour. Agrol 4.0 (275.93 g, 0.1831 moles) was then added and allowed to mix for +2 hours. A titration is then performed to determine the residual isocyanate content. Hydroxyethylmethacrylate (176.3 g, 1.223 moles) was then added and allowed to mix for 3 hours at 60 °C. This reaction resulted in the formation of a clear and yellow, viscous methacrylated polyurethane resin (794.3 g, 94.2% yield).

### EXAMPLE 6

### Preparation of a Curable (Meth)acrylate-Functionalized Polyurethane Using the Direct Method Described Above (Methacrylated Pomoflex 6156 and IPDI (1.0 : 2.0) Polyurethane Resin with IPDI and HEMA Hard Block Moities Prepared in situ)

To a 2-L jacketed polymerization reactor equipped with a thermocouple, stirrer, condenser, and nitrogen inlet/oulet was added isophorone diisocyanate (IPDI)(222.3 g, 1.00 moles), hydroxyethylmethacrylate (51.96 g, 0.399 moles), dibutyltin dilaurate (2.01 g, 0.0031 moles), 3-(3,5-ditert-butyl-4-hydroxyphenyl)propanoic acid, [3-[3-(3,5-ditert-butyl-4-hydroxyphenyl)-1-oxopropoxy]-2,2-bis[[3-(3,5-ditert-butyl-4-hydroxyphenyl)-1-oxopropoxy]methyl]propyl] ester (0.123 g, 0.0001 moles), 4-methoxyphenol (0.123 g, 0.0001 moles), and phosphoric acid (0.08 g, 0.0008 moles). The contents were heated to 65 °C and allowed to react for +1 hour. Pomoflex 6156 (567.64 g, 0.2833 moles) was then added and allowed to mix for +2 hours. A titration is then performed to determine the residual isocyanate content.

### EXAMPLE 7

### Preparation of a Curable (Meth)acrylate-Functionalized Polyurethane Using the Extended Method Described Above (Methacrylated Pomoflex 6156 and IPDI (1.0 : 2.0) Polyurethane Resin

To a 2-L jacketed polymerization reactor equipped with a thermocouple, stirrer, condenser, and nitrogen inlet/oulet was added Pomoflex 6156 (150.00 g, 0.0749 moles), dibutyltin dilaurate (0.41 g, 0.0007 moles), 3-(3,5-ditert-butyl-4-hydroxyphenyl)propanoic acid, [3-[3-(3,5-ditert-butyl-4-hydroxyphenyl)-1-oxopropoxy]-2,2-bis[[3-(3,5-ditert-butyl-4-hydroxyphenyl)-1-oxopropoxy]methyl]propyl] ester (0.026 g, 0.00002 moles), 4-methoxyphenol (0.026 g, 0.0002 moles), and phosphoric acid (0.006 g, 0.00006 moles). The contents were heated to 60 °C and allowed to mix for 15 minutes. Isophorone diisocyante (35.14 g, .1581 moles) was added and allowed to react for +2 hours. A titration is then performed to determine the residual isocyanate content. Hydroxyethylmethacrylate (18.10 g, 0.139 moles) was then added and allowed to mix for 3 hours at 60 °C. This reaction resulted in the formation of a clear and yellow, viscous methacrylated polyurethane resin (192.9 g, 94.7% yield).

### EXAMPLE 8

### Preparation of a Curable (Meth)acrylate-Functionalized Polyurethane Using the Direct Method Described Above (Methacrylated Agrol 2.0)

To a 2-L jacketed polymerization reactor equipped with a thermocouple, stirrer, condenser, and nitrogen inlet/oulet was added Argol 2.0 (101.50 g, 0.0734 moles), dibutyltin dilaurate (0.08 g, 0.0001 moles), 3-(3,5-ditert-butyl-4-hydroxyphenyl)propanoic acid, [3-[3-(3,5-ditert-butyl-4-hydroxyphenyl)-1-oxopropoxy]-2,2-bis[[3-(3,5-ditert-butyl-4-hydroxyphenyl)-1-oxopropoxy]methyl]propyl] ester (0.020 g, 0.00002 moles), 4-methoxyphenol (0.020 g, 0.0002 moles), and phosphoric acid (0.008 g, 0.00008 moles). The contents were heated to 60 °C and allowed to mix for 15 minutes; 2-ethylcyanomethacrylate (40.49 g, 0.0261 moles) was then added and allowed to react for +4 hours. FT-IR was used to measure the consumption of isocyanate groups until reaction completion. Yield was 156.6g (99.2% yield).

### EXAMPLE 9

### Preparation of a Curable (Meth)acrylate-Functionalized Polyurethane Using the Extended Method Described Above (Methacrylated Pomoflex 61212 and IPDI (1.0 : 2.0) Polyurethane Resin

To a 2-L jacketed polymerization reactor equipped with a thermocouple, stirrer, condenser, and nitrogen inlet/oulet was added Pomoflex 61212 (345.48 g, 0.6528 moles), dibutyltin dilaurate (1.63 g, 0.003 moles), 3-(3,5-ditert-butyl-4-hydroxyphenyl)propanoic acid, [3-[3-(3,5-ditert-butyl-4-hydroxyphenyl)-1-oxopropoxy]-2,2-bis[[3-(3,5-ditert-butyl-4-hydroxyphenyl)-1-oxopropoxy]methyl]propyl] ester (0.102 g, 0.00009 moles), 4-methoxyphenol (0.102 g, 0.0008 moles), and phosphoric acid (0.019 g, 0.0002 moles). The contents were heated to 60 °C and allowed to mix for 15 minutes. Isophorone diisocyante (296.01 g, 1.332 moles) was added and allowed to react for +2 hours. A titration is then performed to determine the residual isocyanate content. Hydroxyethylmethacrylate (110.87 g, 0.852 moles) was then added and allowed to mix for 3 hours at 60 °C. This reaction resulted in the formation of a clear and yellow, viscous methacrylated polyurethane resin (788.9 g, 93.4% yield).

## Claims

1. A polyurethane prepared by the reaction product of:
a) an NCO-terminated polymer formed from the reaction of a hydroxylated oleaginous component derived from plant oil comprising hydroxylated soybean oil and a diisocyante; and
b) an alkoxy-functionalized monomer.

2. The polyurethane of claim 1, wherein the diisocyante is selected from the group consisting of isophorone diisocyanate (IPDI), IPDI isocyanaurate, polymeric IPDI, naphthalene 1,5-diisocyanate (NDI), methylene bis-cyclohexylisocyanate, methylene diphenyl diisocyanate (MDI), polymeric MDI, toluene diisocyanate (TDI), isocyanaurate of TDI, TDI-trimethylolpropane adduct, polymeric TDI, hexamethylene diisocyanate (HDI), HDI isocyanaurate, HDI biurate, polymeric HDI, xylylene diisocyanate, hydrogenated xylylene diisocyanate, tetramethyl xylylene diisocyanate, p-phenylene diisocyanate, 3,3'-dimethyldiphenyl-4,4'-diisocyanate (DDDI), 2,2,4-trimethylhexamethylene diisocyanate (TMDI), norbornane diisocyanate (NDI), and 4,4'-dibenzyl diisocyanate (DBDI) and wherein the alkoxy-functionalized monomer is selected from the group consisting of 4-aminobutyltriethoxysilane, 4-aminobutylmethyldiethoxysilane, 4-aminobutyldimethylethoxysilane, 4-aminobutyltrimethoxysilane, 4-aminobutylmethyldimethoxysilane, 4-aminobutyldimethylmethoxysilane, 4-amino-3,3-dimethylbutylmethyldimethoxysilane, dimethylbutyltrimethoxysilane, 1-amino-2-(dimethylethoxysilyl)propane, 3-(m-aminophenoxy)propyltrimethoxysilane, m-aminophenyltrimethoxysilane, m-aminophenyltriethoxysilane, 3-aminopropyltriethoxysilane, 3-aminopropylmethyldiethoxysilane, 3-aminopropyldimethyethoxysilane, 3-aminopropyltrimethoxysilane, 3-aminopropylmethyldimethoxysilane, 3-aminopropyldimethymethoxysilane, 3-aminopropylmethylbis(trimethylsiloxy)silane, 3-aminopropylpentamethyldisiloxane, 11-aminoundecyltriethoxysilane, and 11-aminoundecyltrimethoxysilane.

3. A polyurethane according to claim 1 or 2 prepared by the reaction product of:
a) an NCO-terminated polymer formed from the reaction of a hydroxylated oleaginous component derived from plant oil comprising hydroxylated soybean oil and a isophorone diisocyanate (IPDI); and
b) 3-aminopropyltriethoxysilane.

4. A curable resin composition comprising the reaction product of any of claims 1 to 3 and a moisture cure system.

## Patentansprüche

1. Polyurethan, das durch das Umsetzungsprodukt hergestellt wird von:
a) einem NCO-terminierten Polymer, das aus der Umsetzung einer hydroxylierten öligen Komponente ausgebildet ist, die von Pflanzenöl abgeleitet ist, umfassend das hydroxylierte Sojaöl und ein Diisocyant; und
b) einem Alkoxy-funktionalisierten Monomer.

2. Polyurethan nach Anspruch 1, wobei das Diisocyant aus der Gruppe ausgewählt ist, bestehend aus Isophorondiisocyanat (IPDI), IPDI-Isocyanaurat, polymerem IPDI, Naphthalin-1,5-diisocyanat (NDI), Methylenbiscyclohexylisocyanat, Methylendiphenyldiisocyanat (MDI), polymerem MDI, Toluoldiisocyanat (TDI), Isocyanaurat von TDI, TDI-Trimethylolpropanaddukt, polymerem TDI, Hexamethylendiisocyanat (HDI), HDI-Isocyanaurat, HDI-Biurat, polymerem HDI, Xylylendiisocyanat, hydriertem Xylylendiisocyanat, Tetramethylxylylendiisocyanat, p-Phenylendiisocyanat, 3,3'-Dimethyldiphenyl-4,4'-diisocyanat (DDDI), 2,2,4-Trimethylhexamethylendiisocyanat (TMDI), Norbornandiisocyanat (NDI) und 4,4"-Dibenzyldiisocyanat (DBDI), und wobei das Alkoxy-funktionalisierte Monomer aus der Gruppe ausgewählt ist, bestehend aus 4-Aminobutyltriethoxysilan, 4-Aminobutylmethyldiethoxysilan, 4-Aminobutylmethyldimethoxysilan, 4-Aminobutyltrimethoxysilan, 4-Aminobutylmethyldimethoxysilan, 4-Aminobutyldimethylmethoxysilan, 4-Amino-3,3-dimethylbutylmethyldimethoxysilan, Dimethylbutyltrimethoxysilan, 1-Amino-2-(dimethylethoxysilyl)propan, 3-(m-Aminophenoxy)propyltrimethoxysilan, m-Aminophenyltrimethoxysilan, m-Aminophenyltriethoxysilan, 3-Aminopropyltriethoxysilan, 3-Aminopropylmethyldiethoxysilan, 3-Aminopropyldimethyethoxysilan, 3-Aminopropyltrimethoxysilan, 3-Aminopropylmethyldimethoxysilan, 3-Aminopropyldimethymethoxysilan, 3-Aminopropylmethylbis(trimethylsiloxy)silan, 3-Aminopropylpentamethyldisiloxan, 11-Aminoundecyltriethoxysilan und 11-Aminoundecyltrimethoxysilan.

3. Polyurethan nach Anspruch 1 oder 2, das durch das Umsetzungsprodukt hergestellt wird von:
a) einem NCO-terminierten Polymer, das aus der Umsetzung einer hydroxylierten öligen Komponente ausgebildet ist, die von Pflanzenöl abgeleitet ist, umfassend das hydroxylierte Sojaöl und ein Isophorondiisocyanat (IPDI); und
b) 3-Aminopropyltriethoxysilan.

4. Härtbare Harzzusammensetzung, umfassend das Umsetzungsprodukt nach einem der Ansprüche 1 bis 3 und ein Feuchtigkeitshärtungssystem.

## Revendications

1. Polyuréthane préparé par le produit réactionnel de :
a) un polymère à terminaison NCO formé à partir de la réaction d'un composant oléagineux hydroxylé issu d'huile végétale comprenant de l'huile de soja hydroxylée et d'un diisocyanate ; et
b) un monomère à fonctionnalité alcoxy.

2. Polyuréthane selon la revendication 1, dans lequel le diisocyanate est choisi dans le groupe constitué de diisocyanate d'isophorone (IPDI), isocyanaurate d'IPDI, IPDI polymère, 1,5-diisocyanate de naphtalène (NDI), bis-cyclohexylisocyanate de méthylène, diphényl diisocyanate de méthylène (MDI), MDI polymère, diisocyanate de toluène (TDI), isocyanaurate de TDI, adduit TDI-triméthylolpropane, TDI polymère, diisocyanate d'hexaméthylène (HDI), isocyanaurate de HDI, biurate de HDI, HDI polymère, diisocyanate de xylylène, diisocyanate de xylylène hydrogéné, diisocyanate de tétraméthyl xylylène, diisocyanate de p-phénylène, 3,3'-diméthyldiphényl-4,4'-diisocyanate (DDDI), diisocyanate de 2,2,4-triméthylhexaméthylène (TMDI), diisocyanate de norbornane (NDI), et diisocyanate de 4,4'-dibenzyle (DBDI) et dans lequel le monomère à fonctionnalité alcoxy est choisi dans le groupe constitué de 4-aminobutyltriéthoxysilane, 4-aminobutylméthyldiéthoxysilane, 4-aminobutyldiméthyléthoxysilane, 4-aminobutyltriméthoxysilane, 4-aminobutylméthyldiméthoxysilane, 4-aminobutyldiméthylméthoxysilane, 4-amino-3,3-diméthylbutylméthyldiméthoxysilane, diméthylbutyltriméthoxysilane, 1-amino-2-(diméthyléthoxysilyl)propane, 3-(m-aminophénoxy)propyltriméthoxysilane, m-aminophényltriméthoxysilane, m-aminophényltriéthoxysilane, 3-aminopropyltriéthoxysilane, 3-aminopropylméthyldiéthoxysilane, 3-aminopropyldiméthyethoxysilane, 3-aminopropyltriméthoxysilane, 3-aminopropylméthyldiméthoxysilane, 3-aminopropyldiméthyméthoxysilane, 3-aminopropylméthylbis(triméthylsiloxy)silane, 3-aminopropylpentaméthyldisiloxane, 11-aminoundécyltriéthoxysilane, et 11-aminoundécyltriméthoxysilane.

3. Polyuréthane selon la revendication 1 ou 2 préparé par le produit réactionnel de :
a) un polymère à terminaison NCO formé à partir de la réaction d'un composant oléagineux hydroxylé issu d'huile végétale comprenant de l'huile de soja hydroxylée et d'un diisocyanate d'isophorone (IPDI) ; et
b) 3-aminopropyltriéthoxysilane.

4. Composition de résine durcissable comprenant le produit réactionnel selon l'une quelconque des revendications 1 à 3 et un système de durcissement à l'humidité.
